Europäisches Patentamt

European Patent Office

Office européen des brevets

(19)

(11) Numéro de publication: **0 024 986**
**B1**

# (12) FASCICULE DE BREVET EUROPEEN

(45) Date de publication du fascicule du brevet:
09.02.83

(21) Numéro de dépôt: 80401210.2

(22) Date de dépôt: 25.08.80

(51) Int. Cl.³: **B 21 D 39/04,** F 16 L 19/02

(54) **Procédé pour munir une canalisation d'un embout de raccord et utilisation d'embouts ainsi obtenus pour le raccord de canalisations.**

(30) Priorité: **03.09.79 FR 7922005**

(43) Date de publication de la demande:
**11.03.81 Bulletin 81/10**

(45) Mention de la délivrance du brevet:
**09.02.83 Bulletin 83/6**

(84) Etats contractants désignés:
**AT BE CH DE GB IT LI NL SE**

(56) Documents cités:
**CH-A-148 546**
**DE-A-2 744 345**
**FR-A-955 523**
**GB-A-1 191 111**
**US-A-4 161 273**

(73) Titulaire: **SOCIETE NATIONALE INDUSTRIELLE AEROSPATIALE, 37 boulevard de Montmorency, F-75016 Paris Cedex 16 (FR)**

(72) Inventeur: **Duret, Maurice Louis, 2bis rue Beltçaguy, F-13100 Aix en Provence (FR)**
Inventeur: **Nicolas, Yves Marie Lucien, 8, rue Joubert, F-13005 Marseille (FR)**

(74) Mandataire: **Bonnetat, Christian, Cabinet PROPI Conseils 23 rue de Léningrad, F-75008 Paris (FR)**

BUNDESDRUCKEREI BERLIN

## Procédé pour munir une canalisation d'un embout de raccord, et utilisation d'embouts ainsi obtenus pour le raccord de canalisations

La présente invention concerne un procédé permettant de raccorder des canalisations soit à d'autres canalisations, soit à des dispositifs d'utilisation, d'alimentation, etc. . . Quoique non exclusivement, la présente invention s'applique tout particulièrement aux canalisations de transport de fluide utilisées à bord des aéronefs et elle sera ci-après plus particulièrement décrite en rapport avec cette application.

La présente invention concerne aussi l'utilisation des embouts obtenus par le procédé revendiqué pour le raccord de deux canalisations.

On sait qu'à bord des avions, des hélicoptères, etc. . . . il existe de nombreuses canalisations destinées à véhiculer des fluides. Pour des raisons de poids, ces canalisations sont réalisées en alliage léger. Lorsque l'on désire raccorder de telles canalisations, soit entre elles, soit à des dispositifs d'utilisation ou d'alimentation, on rapporte à leurs extrémités des embouts spéciaux de raccord qui y sont fixés par soudure, sertissage, etc. . . . Une telle méthode connue présente des inconvénients: en effet, de tels embouts de raccord sont usinés, ce qui entraîne qu'ils sont lourds et onéreux.

La présente invention a pour objet de remédier à ces inconvénients. Elle concerne un procédé permettant de raccorder des canalisations sans utiliser de tels embouts, en faisant l'économie de leur coût et de leur poids.

A cette fin, selon l'invention, le procédé pour munir une canalisation rigide, notamment en alliage léger, d'un embout de raccord comportant un bourrelet périphérique saillant, procédé selon lequel on commence par mettre en place une fourrure de renfort à une extrémité libre de ladite canalisation, après quoi ladite extrémité pourvue de sa fourrure est déformée à la forme désirée pour ledit embout est caractérisé en ce que l'on choisit la fourrure en une matière ayant des caractéristiques mécaniques supérieures à celles de la matière de la canalisation, en ce que les bords d'extrémité de la fourrure sont chanfreinés ou arrondis en regard de la surface de ladite extrémité de canalisation et en ce que ladite extrémité et ladite fourrure sont déformées ensemble pour former, dans l'embout, le bourrelet périphérique saillant qui assure au moins en partie la solidarisation de ladite fourrure sur ladite extrémité de canalisation.

Ainsi, on obtient un embout, léger et peu coûteux, faisant bloc avec ladite canalisation, sans usinage, ni soudage d'embout rapporté. La fourrure est définitivement solidarisée de l'extrémité de la canalisation par le formage et elle renforce ladite extrémité au moment de celui-ci. En plus de sa fonction de solidarisation de la fourrure sur l'extrémité de canalisation, le bourrelet participe à la rigidification de l'embout, tandis que le formage simultané de la fourrure et du tube produit une étanchéification de l'assemblage des pièces.

On remarquera que, selon le procédé de l'invention, la fourrure n'est en aucune manière rendue solidaire de l'extrémité de la canalisation, avant formage du bourrelet. Par suite, lors de ce formage, la fourrure peut »jouer« par rapport à la canalisation, ce qui est important, compte tenu des différences de résistance mécanique et de réaction à la déformation des matières constitutives de la fourrure (par exemple en acier inoxydable) et de la canalisation (en alliage léger). Le fait que les bords d'extrémité de la fourrure soient chanfreinés ou arrondis en regard de la canalisation permet d'obtenir, non seulement qu'ils fassent saillie par rapport à la canalisation, mais qu'ils ne marquent ou coupent pas la canalisation, puisqu'ils sont en une matière mécaniquement plus résistance que celle d. ladite canalisation.

On notera par ailleurs que le brevet CH-A-148 546 décrit un procédé selon lequel une fourrure de renfort est déformée simultanément à l'extrémité d'une canalisation. Cependant, l'embout obtenu ne comporte pas de bourrelet, de sorte que pour empêcher la désolidarisation du manchon de l'extrémité de la canalisation, on est obligé de prévoir un rebord. En fait, avec ce procédé connu, on n'obtient qu'un simple élargissement cylindrique et non pas un embout à proprement parler, de sorte que l'extrémité conformée du document CH-A-148 546 ne peut servir de raccord à des canalisations hydrauliques d'aéronefs.

De plus, le brevet DE-A-2 744 345 décrit un embout conformé uniquement dans l'extrémité d'une canalisation. La fourrure de renfort n'est pas conformée avec ladite extrémité et est maintenue solidaire de celle-ci par un bourrelet ou un rebord emprisonnant ses extrémités. Cette fourrure a surtout pour objet de conférer à l'embout une résistance à l'écrasement parallèlement à l'axe de la canalisation.

Enfin, le brevet US-A-4 161 273 montre que l'on peut chanfreiner l'orifice extrême d'un tube.

Avec le procédé selon l'invention, la fourrure peut être soit intérieure, soit extérieure à la canalisation. Toutefois, notamment lorsque l'on désire qu'un écrou soit rendu prisonnier de l'extrémité de canalisation de sorte que ledit bourrelet serve de butées d'arrêt, il est intéressant que la fourrure soit disposée à l'extérieur de la canalisation, puisqu'elle est choisie mécaniquement plus résistante que cette dernière.

Lorsque l'embout obtenu par le procédé de l'invention est de type mâle, il peut présenter à son extrémité libre un profil en forme d'olive. Lorsqu'il est de type femelle, son profil à son extrémité libre peut être conique.

L'expansion radiale de la canalisation et de sa fourrure peut être obtenue par tout procédé connu. Toutefois, il est avantageux d'utiliser celui connu sous le nom de formage électromagnétique.

Ainsi, grâce à l'invention, on peut raccorder deux canalisations en formant, d'une part, sur l'une desdites canalisations un embout mâle en forme d'olive et, d'autre part, sur l'autre canalisation un embout femelle conique et en prévoyant sur chacun desdits embouts un écrou de raccord pouvant librement coulisser sur l'embout correspondant et susceptible de prendre appui derrière le bourrelet associé, lesdits écrous étant susceptibles de coopérer pour solidariser l'un de l'autre lesdits embouts dans une position pour laquelle une partie de la surface extérieure de l'embout mâle est au contact d'une partie de la surface intérieure de l'embout femelle. Avantageusement, l'un desdits écrous peut comporter un épaulement conique servant, dans ladite position de solidarisation, d'appui périphérique extérieur à la partie conique de l'embout femelle.

Les figures du dessin annexé ferront bien comprendre comment l'invention peut être réalisée.

Les figures 1 à 3 illustrent la réalisation d'un embout à fourrure intérieure, conformément à la présente invention.

Les figures 4 à 6 illustrent la réalisation d'un embout à fourrure extérieure, conformément à la présente invention.

La figure 7 montre, en demi-coupe axiale, une matrice pour le formage des embouts des figures 3 ou 6.

La figure 8 montre, moitié en coupe axiale, moitié en vue extérieure, un raccord entre deux canalisations réalisé conformément à l'invention.

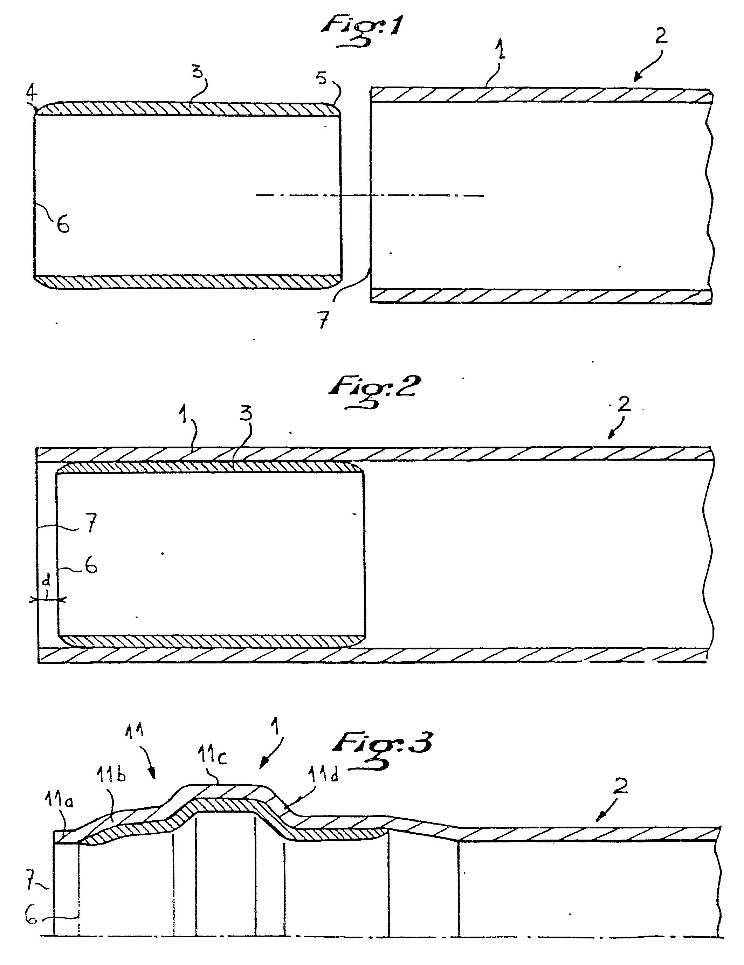

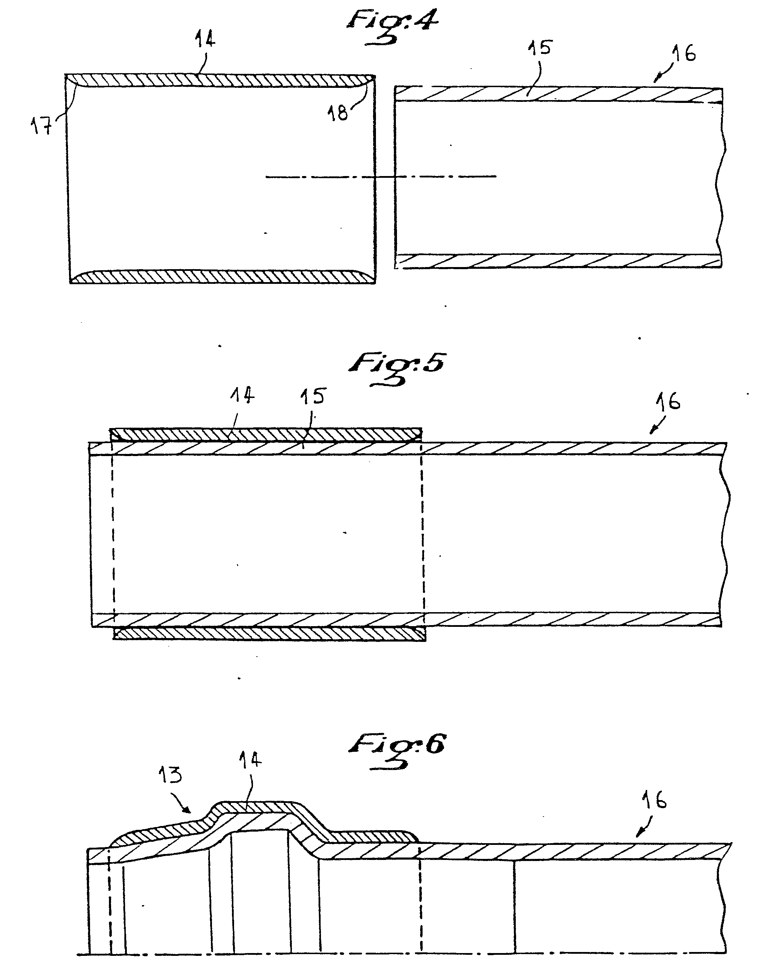

Sur la figure 1, on a représenté une extrémité 1 d'une canalisation ou tuyauterie 2, par exemple en alliage léger et destinée à véhiculer un fluide sous pression à bord d'un aéronef. Dans cette extrémité 1, on introduit une fourrure 3, par exemple en acier inoxydable, coaxiale à ladite tuyauterie 2 et coulissant à frottement doux à l'intérieur de celle-ci (voir la figure 2). Afin de ne pas marquer la tuyauterie 2 au cours de l'opération de formage ultérieur, les bords extérieurs d'extrémité 4 et 5 de la fourrure intérieure 2 sont chanfreinés ou arrondis. De préférence, la fourrure intérieure 3 est introduite dans la tuyauterie 2 de façon que sa face d'extrémité 6 soit en retrait d'une distance d par rapport à la face d'extrémité correspondante 7 de ladite tuyauterie.

Ensuite, l'extrémité 1 de la tuyauterie 2, pourvue de sa fourrure intérieure 3, est introduite dans une matrice 8, en au moins deux parties 8a et 8b (la partie 8b peut être solidarisée en deux parties dont le plan de joint est diamétral), présentant intérieurement une cavité de révolution 9 dont le profil correspond au profil extérieur de l'embout à obtenir. La cavité 9 comporte un épaulement 10 contre lequel vient buter la face d'extrémité 7 de la tuyauterie 2, de sorte que ledit épaulement sert au positionnement de l'extrémité 1 à l'intérieur de la cavité 9 de la matrice 8.

Ensuite, par tout procédé connu tel que ceux mettant en œuvre l'expansion d'un élastomère, la compression d'un fluide ou d'un métal, le formage électromagnétique etc. . . . l'extrémité 1 et sa fourrure intérieure 3 sont dilatées radialement, jusqu'à ce que ladite extrémité 1 soit appliquée sous pression contre la paroi de la cavité intérieure 9 de la matrice 8.

On obtient alors à l'extrémité 1 de la tuyauterie 2, un embout de raccord conformé 11, faisant partie intégrante de ladite tuyauterie.

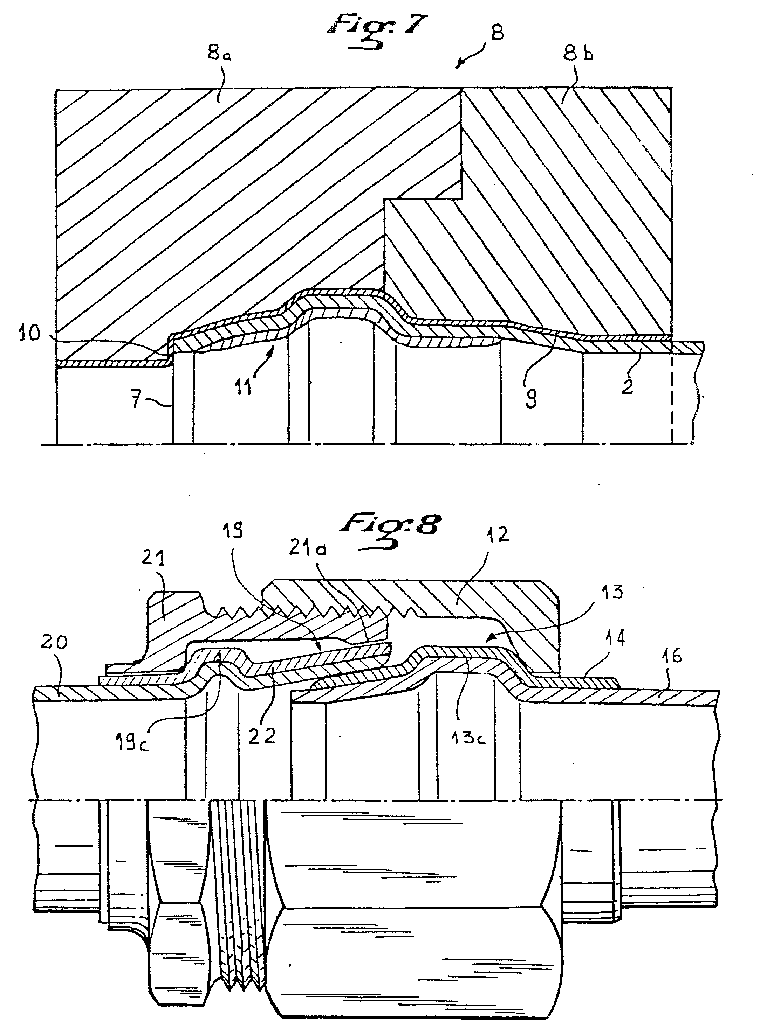

Sur la figure 3, l'embout de raccord 11 illustré est du type mâle et présente un profil standard aux normes aéronautiques. Ce profil standard comporte une embouchure cylindrique 11a, suivie d'une portion 11b en forme d'olive, elle-même prolongée un renflement 11c, ménageant un épaulement 11d du côté opposé à la face d'extrémité 7. Cet épaulement 11d sert, comme le montre la figure 8, d'appui à un écrou 12, traverse par la tuyauterie 2 et apte à la liaison à tout dispositif désiré.

De préférence, l'expansion radiale de l'extrémité de la tuyauterie 2 dans la matrice 8 est cependant obtenue par un procédé de formage à grande vitesse de déformation, par exemple le formage électromagnétique.

Les machines connues de formage par impulsions électromagnétiques se composent d'un circuit d'accumulation d'énergie, généralement constitué par une batterie de condensateurs, d'un circuit de décharge contrôlée de cette énergie et d'un circuit d'utilisation essentiellement constitué par des bobines de travail, éventuellement consommables. Ces bobines sont introduites à l'intérieur de l'extrémité 2. Grâce au champ magnétique desdites bobines et aux courants de Foucault qu'engendre ce champ magnétique dans l'épaisseur de l'extrémité 2 et de la fourrure intérieure 3, celles-ci sont soumises à des forces électromagnétiques les plaquant contre les parois de la cavité 9.

Sur les figures 4 à 6, on a illustré la réalisation d'un embout 13, avec fourrure extérieure 14, à l'extrémité 15 d'une tuyauterie 16. Sur cette extrémité 15, on glisse la fourrure extérieure 14 dont les bords intérieurs d'extrémité 17 et 18, ont été chanfreinés ou arrondis. Ensuite, l'extrémité 15 pourvue de sa fourrure 14 est conformée, dans une matrice semblable à la matrice 8, de façon semblable à ce qui a été décrit à propos de l'embout 13 de la figure 6.

Quoique sur les figures 1 à 6, on ait illustré la réalisation, d'embouts mâles, il va de soi que le procédé selon l'invention peut également être utilisé pour la réalisation d'embouts femelles, par exemple comme celui portant la référence 19 sur la figure 8 et présentant un profil conique évasé vers l'extérieur. Cette figure 8 illustre le raccord entre la tuyauterie 16 pourvue de son embout mâle 13 et une tuyauterie 20, à l'extrémité de laquelle est conformé l'embout femelle 19. Le blocage de ce raccord est obtenu au moyen de deux écrous coopérants 12 et 21, respectivement traversés librement par les canalisations 16 et 20 et prenant appui sur les épaulements arrière de bourrelets renflés 13c et 19c faisant partie desdits embouts 13 et 19. L'écrou de blocage 21 comporte à l'intérieur de son extrémité filetée un épaulement conique 21a sur lequel vient s'appuyer l'extrémité du manchon 22 de l'embout femelle 19, de façon à éviter une déformation excessive de cet embout lors du serrage des écrous 12 et 21.

Comme on le remarquera, sur la figure 8, la fourrure 14 de l'embout mâle 13 est extérieure, de même que la fourrure 22 de l'embout femelle 19, de sorte que les écrous coopérants 12 et 21 s'appuient, lors de leur serrage, sur les épaulements arrière de ces fourrures. Ainsi, ces fourrures étant choisies mécaniquement plus résistantes que les conduits 16 et 20, lesdits embouts supportent sans détérioration de nombreux montages et démontages successifs. Toutefois, il va de soi que la fourrure 14 pourrait être intérieure (comme la fourrure 3) et que la fourrure 22 pourrait être également intérieure. .

De plus, on comprendra aisément que les embouts 11, 13, 19 selon l'invention peuvent servir à raccorder les canalisations correspondant à des dispositifs autres que des canalisations, comme par exemple des sources de fluide sous pression, des moteurs hydrauliques, des vérins.

## Revendications

1. Procédé pour munir une canalisation rigide (2, 16 et 20), notamment en alliage léger, d'un embout de raccord (11, 13 et 19) comportant un bourrelet périphérique saillant (11c, 13c, 19c), procédé selon lequel on commence par mettre en place une fourrure de renfort (3, 14, 22) à une extrémité libre (1) de ladite canalisation, après quoi ladite extrémité pourvue de sa fourrure est déformée à la forme désirée pour ledit embout, caractérisé en ce que l'on choisit la fourrure (3, 14, 22) en une matière ayant des caractéristiques mécaniques supérieures à celles de la matière de la canalisation, en ce que les bords d'extrémité (4) de la fourrure (3, 14, 22) sont chanfreinés ou arrondis en regard de la surface de ladite extrémité de canalisation et en ce que ladite extrémité (1) et ladite fourrure (3, 14, 22) sont déformées ensemble pour former, dans l'embout, le bourrelet périphérique saillant (11c, 13c, 19c), qui assure au moins en partie la solidarisation de ladite fourrure sur ladite extrémité de canalisation.

2. Procédé selon la revendication 1, caractérisé en ce que la fourrure (3) est disposée à l'intérieur de l'extrémité de canalisation.

3. Procédé selon la revendication 1, caractérisé en ce que la fourrure (3, 14, 22) est disposée à l'extérieur de l'extrémité de canalisation.

4. Procédé selon la revendication 1, caractérisé en ce que l'embout (11) est du type mâle et présente à son extrémité libre un profil en forme d'olive.

5. Procédé selon la revendication 1, caractérisé en ce que l'embout (14) est du type femelle et présente à son extrémité libre un profil conique.

6. Procédé selon la revendication 1, caractérisé en ce que l'expansion radiale de l'extrémité de canalisation (1) et de sa fourrure (3, 14, 22) est obtenue par formage électromagnétique.

7. Utilisation d'un embout mâle (13) prévu sur une canalisation (16) obtenu par le procédé selon la revendication 4, et d'un embout femelle (19) sur une autre canalisation (20) obtenu par le procédé selon la revendication 5 pour le raccord de deux canalisations (16, 20), caractérisée en ce que sur chacun desdits embouts (13, 19) est prévu un écrou de raccord (12, 21) pouvant librement coulisser sur l'embout correspondant et susceptible de prendre appui derrière le bourrelet associé (13c, 19c) et en ce que lesdits écrous (12, 21) sont susceptibles de coopérer pour solidariser l'un de l'autre lesdits embouts dans une position pour laquelle une partie de la surface extérieure de l'embout mâle (13) est au contact d'une partie de la surface intérieure de l'embout femelle (19).

8. Utilisation selon la revendication 7, caractérisée en ce que l'un desdits écrous (21) comporte un épaulement conique (21a) servant, dans ladite position de solidarisation, d'appui périphérique extérieur à la partie conique de l'embout femelle (22).

## Patentansprüche

1. Verfahren zum Versehen einer starren Rohrleitung (2, 16 und 20), insbesondere aus einer leichten Legierung, mit einem Anschlußstück (11, 13 und 19), das einen hervortretenden Umfangsflansch (11c, 13c, 19c) aufweist, indem zunächst eine Verstärkungseinlage (3, 14, 22) an einem freien Ende (1) der Rohrleitung eingesetzt wird, wonach das mit der Einlage versehene Ende auf die für das Anschlußstück gewünschte Gestalt verformt wird, dadurch gekennzeichnet, daß die Einlage (3, 14, 22) aus einem Werkstoff gewählt wird, deren mechanische Eigenschaften denen des Werkstoffs der Rohrleitung überlegen sind, daß die Endränder (4) der Einlage (3, 14, 22) gegenüber der Oberfläche des Rohrleitungsendes angesenkt oder abgerundet sind und daß das Ende (1) und die Einlage (3, 14, 22) gemeinsam verformt werden, um am Anschlußstück den hervortretenden Umfangsflansch (11c, 13c, 19c) zu bilden, der zumindest zum Teil die Bildung der Verbindung der Einlage mit dem Rohrleitungsende gewährleistet.

2. Verfahren nach Anspruch 1, dadurch gekennzeichnet, daß die Einlage (3) innerhalb des Rohrleitungsendes angeordnet ist.

3. Verfahren nach Anspruch 1, dadurch gekennzeichnet, daß die Einlage (3, 14, 22) außerhalb des Rohrleitungsendes angeordnet ist.

4. Verfahren nach Anspruch 1, dadurch gekennzeichnet, daß das Anschlußstück (11) als Steckverbindung (männlich) ausgebildet ist und an seinem freien Ende ein olivenförmiges Profil aufweist.

5. Verfahren nach Anspruch 1, dadurch gekennzeichnet, daß das Anschlußstück (14) als Fassung (weiblich) ausgebildet ist und an seinem freien Ende ein konisches Profil aufweist.

6. Verfahren nach Anspruch 1, dadurch gekennzeichnet, daß die radiale Aufweitung des Rohrleitungsendes (1) und der Einlage (3, 14, 22) durch elektromagnetisches Verformen erreicht wird.

7. Anwendung eines (männlichen) Steckanschlußstückes (13), das auf einer Rohrleitung (16) nach dem Verfahren von Anspruch 4 vorgesehen ist, und eines als Fassung (weiblich) ausgebildeten Anschlußstückes (19) nach dem Verfahren von Anspruch 5 vorgesehen ist, um beide Rohrleitungen (16, 20) miteinander zu verbinden, dadurch gekennzeichnet, daß auf jedem Anschlußstück (13, 19) eine Übergangsmutter (12, 21) vorgesehen ist, die frei auf dem entsprechenden Anschlußstück gleiten und hinter dem zugeordneten Flansch (13c, 19c) zur Anlage kommen kann, und daß die Muttern (12, 21) zur Bildung der Verbindung beider Anschlußstücke in einer Stellung zusammenarbeiten können, in der ein Teil der Außenfläche des (männlichen) Steckeranschlußstückes (13) mit einem Teil der Innenfläche des als Fassung (weiblich) ausgebildeten Anschlußstückes (19) in Kontakt steht.

8. Anwendung nach Anspruch 7, dadurch gekennzeichnet, daß eine der Muttern (21) einen konischen Ansatz (21a) aufweist, der in der Stellung der Verbindungsbildung dazu dient, sich außerhalb vom konischen Teil des als Fassung (weiblich) ausgebildeten Anschlußstücks (22) peripherisch anzulegen.

## Claims

1. Process for providing a rigid pipe (2, 16 and 20), particularly of light alloy, with a connecting union (11, 13 and 19) comprising a projecting peripheral bead (11c, 13c, 19c), according to which process one starts by positioning a reinforcing lining (3, 14, 22) at one free end (1) of said pipe, after which said end provided with its lining is deformed to the form desired for said union, characterised in that lining (3, 14, 22) is chosen in a material having mechanical characteristics superior to those of the material of the material of the pipe, in that the end edges (4) of the lining (3, 14, 22) are bevelled or rounded opposite the surface of said pipe end and in that said end (1) and said lining (3, 14, 22) are deformed together to form, in the union, the projecting peripheral bead (11c, 13c, 19c) which ensures at least in part the connection of said lining on said pipe end.

2. Process according to Claim 1, characterised in that the lining (3) is disposed inside the pipe end.

3. Process according to Claim 1, characterised in that the lining (3, 14, 22) is disposed outside the pipe end.

4. Process according to Claim 1, characterised in that the union (11) is of the male type and presents at its free end an olive-shaped section.

5. Process according to Claim 1, characterised in that the union (14) is of female type and presents at its free end a conical section.

6. Process according to Claim 1, characterised in that radial expansion of the pipe end (1) and of its lining (3, 14, 22) is obtained by electromagnetic forming.

7. Use of a male union (13) provided on one pipe (16) obtained by the process according to Claim 4, and of a female union (19) on another pipe (20) obtained by the process according to Claim 5 for the connection of two pipes (16, 20), characterised in that, on each of said unions (13, 19) is provided a connecting nut (12, 21) adapted to slide freely on the corresponding union and capable of abutting behind the associated bead (13c, 19c) and in that said nuts (12, 21) are capable of cooperating to connect said unions one to the other in a position for which part of the outer surface of the male union (13) is in contact with a part of the inner surface of the female union (19).

8. Use according to Claim 7, characterised in that one of said nuts (21) comprises a conical shoulder (21a) serving, in said position of connection, as outer peripheral support for the conical part of the female union (22).

Fig.1

Fig.2

Fig.3

*Fig.4*

*Fig.5*

*Fig.6*

*Fig. 7*

*Fig. 8*